# EUROPEAN PATENT APPLICATION

(11) **EP 1 331 576 A1**
(43) Date of publication of application: **30.07.2003**
(21) Application number: 01974806.0
(22) Date of filing: 11.10.2001
(51) Int. Cl.: G06F 17/30, H04N 7/173, H04N 5/76

(54) **SEARCH INFORMATION TRANSMITTING APPARATUS**

(30) Priority: 20.10.2000 JP 2000320187
(71) Applicant: SHARP KABUSHIKI KAISHA, Osaka 545-8522 (JP)
(72) Inventor: TOKUMO, Yasuaki, Chiba-shi, Chiba 266-0005 (JP); WATANABE, Shuichi, Chiba-shi, Chiba 266-0005 (JP); OKADA, Hiroyuki, Chiba-shi, Chiba 266-0016 (JP)
(74) Representative: Brown, Kenneth Richard
(86) International application number: JP0108960
(87) International publication number: WO02035388

(57) **Abstract**

Searching for information of moving image contents, a search information transmitting apparatus transmitting or receiving search information represented as a tree structure operates in the following manner, in transmitting or receiving the search information. Upon receiving the search information as an input, a search information analyzing unit (101) analyzes the input search information, and outputs a plurality of search information elements constituting the search information. A filtering processing unit (102) extracts, based on a condition set by a condition setting unit (104), two or more search information elements among the plurality of search information elements supplied from the search information analyzing unit (101). A search information reorganizing unit (103) generates a partial tree of the search information represented by the tree structure, based on the two or more search information elements extracted by the filtering processing unit (102). The search information represented by the generated partial tree is then transmitted or stored.

## Description

### Technical Field

The present invention relates to an apparatus for transmitting information having a tree structure (hereinafter referred to as search information) added directly or indirectly to moving image contents for searching information representative of digital moving images (hereinafter referred to as moving image contents).

### Background Art

In a search for moving image contents, every time point or every spatial point (image plane) of the moving image contents can be an object of search. Therefore, in order to execute an exact search, it is necessary to reproduce the moving image contents as a whole and to check in detail. Such a method of searching, however, is not at all efficient, and when the number of moving image contents as the target of search increases, the method would be even less practical.

Various methods have been proposed as methods enabling a user to quickly and efficiently search for desired moving image contents or a desired portion of the moving image contents, in which search information (which search information is also referred to as metadata for search) to be added to corresponding moving image contents is prepared, a search is executed based on the search information, and information of the desired moving image contents or information of the desired portion of the moving image contents is obtained.

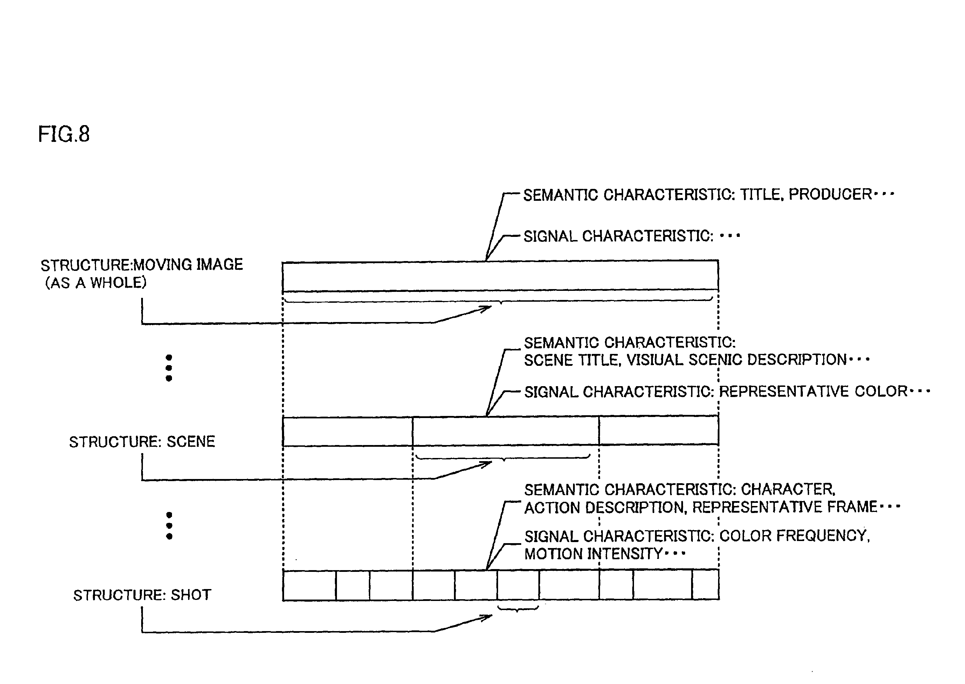

Figs. 8 to 10 represent examples of the search information added to the moving image contents. Fig. 8 shows a schematic structure of common moving image contents. Such a structure is widely known and disclosed, for example, in Japanese Patent Laying-Open Nos.10-108071 and 10-257436.

As can be seen from Fig.8, the entire moving image contents is divided, along time, into a number of scenes. Here, the term scene refers to a section mainly of a semantic unity along the time axis, and scenes may include large sections such as part 1 and part 2 of a movie as well as a very small section such as a scene of "A and B fighting against each other." Therefore, the actual division of the entire moving image contents into scenes is not limited to one stage division such as shown in Fig. 8, but rather proceeds gradually over a plurality of stages.

One scene is further divided into a number of shots (or into smaller scenes) along the time axis. Here, the term shot refers to one section along time consisting of continuous frame images picked-up by one operation, and in the moving images, it refers to a section between two editing points (cut points). A shot is a kind of a scene, and the shot may further be divided into smaller shots (sub-shots). Though not shown, the shot can eventually be divided into one-by-one frame images. In this manner, the moving image contents has a hierarchical structure divided from the entire body to small portions and further to smaller portions. Corresponding search information is added to each level of the hierarchy.

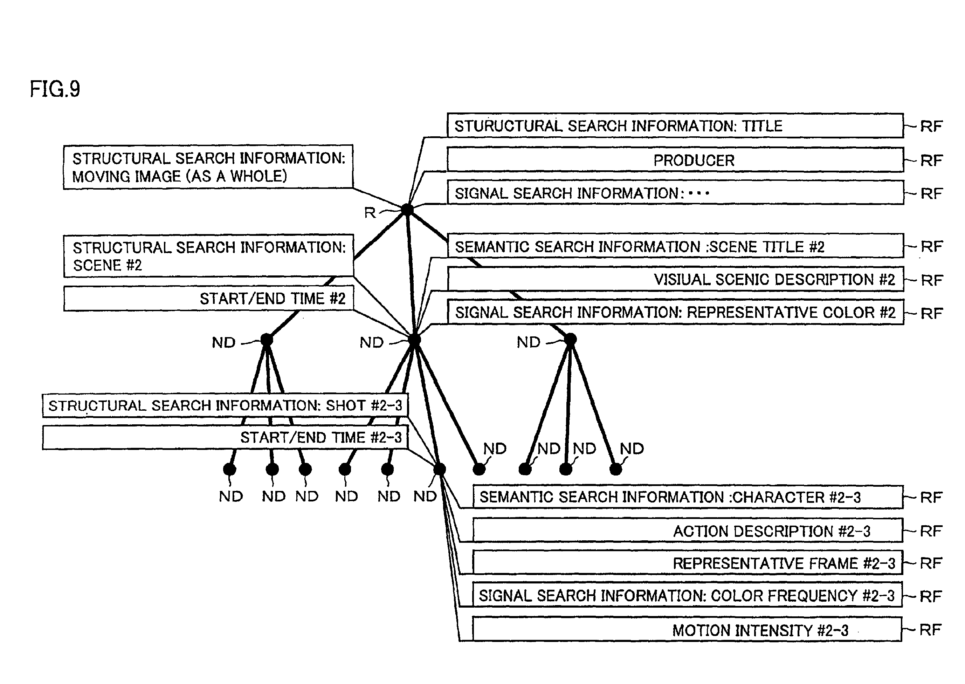

Fig. 9 represents search information for the moving image contents of Fig. 8. The search information of moving image contents is represented by a tree structure such as shown in Fig.9. The search information of moving image contents includes structural search information, semantic search information and signal search information.

The structural search information refers to information representing the hierarchical structure of the moving image contents shown in Fig. 8. The structural search information includes structuring information for representing the tree structure, that is, relation between various scenes or shots of the entire moving image contents, and structural attribute information representing attribute of each scene or shot resulting from the division.

In the tree of Fig. 9, the root R represents the entire moving image contents, and each node ND represents each divided scene or shot. A node ID or level information appended to the root R or to each node ND constitutes the structuring information, and a start time or end time information appended to each scene or shot constitutes the structural attribute information.

The semantic search information refers to search information defined by semantic characteristics of the moving image contents. For example, the title of the entire moving image contents, information indicative of a producer, and information of visual scenic description of a scene constitute the semantic search information.

The signal search information refers to search information defined by physical characteristics of signals of the moving image contents. For example, color frequency information, motion intensity information or the like for each shot (or for a representative frame image thereof) constitutes the signal search information.

The semantic search information and signal search information are provided as leafs RF linked to each corresponding node ND.

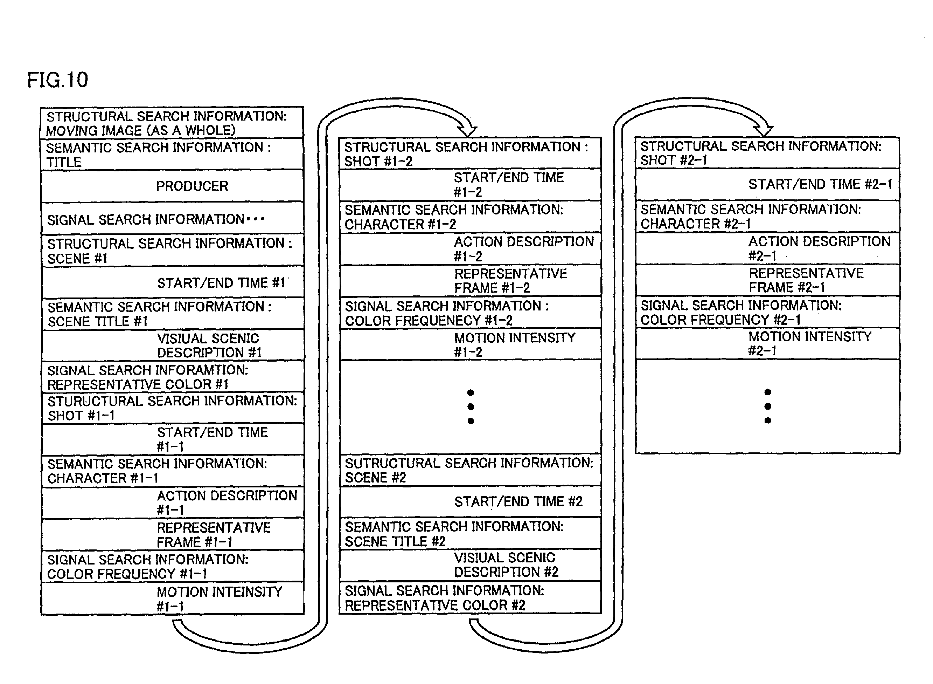

Fig. 10 represents the manner of recording when the search information having the tree structure shown in Fig. 9 is recorded. As can be seen from Fig. 10, the search information having the tree structure shown in Fig. 9 is recorded in the order starting from the root R at the left end (preceding in time) and tracing the nodes ND and the leafs RF successively.

Though the highest level (root R) is shown as representing one, entire moving image content in Figs. 8 to 10, it is not limited to one moving image content, and it may be considered as a set of a plurality of moving images. By way of example, the highest level may be video programs as a whole that are broadcast in one day on one channel. The video programs as a whole broadcast in one day on one channel are divided into programs one by one, that is, respective moving image contents, in the next level. Each of the moving image contents is divided into a plurality of scenes, and each scene is divided into a plurality of shots.

By the search information having the tree structure for the moving image contents, it becomes possible to present the structure of the moving image contents along time in a form easily understandable by the user, associated with various pieces of search information. Therefore, the search information having the tree structure is well suited for operations such as edition of the moving image contents by the user with visual confirmation based on the search information, or edition of the search information itself. It is noted, however, that when the size of the moving image contents becomes large, the size of the tree representing the search information also becomes very large.

Here, the node ID information within the structural search information is referred to as a structural search information element, action describing information within the semantic search information is referred to as a semantic search information element, and color frequency information, motion frequency information or the like within the signal search information is referred to as a signal search information element.

When the conventional search information having the tree structure for the moving image contents is transmitted, even the data that are not necessary for the user are transmitted, no matter whether it is transmitted divided or not. Therefore, it has been difficult to attain high transmission efficiency of the search information. For example, there has been no consideration as to the requests such as "motion information is unnecessary, as search based on color frequency signal is desired," or "only the titles of all scenes are desired for the mean time."

### Disclosure of the Invention

An object of the present invention is to provide a search information transmitting apparatus capable of transmitting only the necessary portion of search information for searching for moving image contents.

The search information transmitting apparatus in accordance with a certain aspect of the present invention is for transmitting or receiving search information represented by a tree structure for searching for information of moving image contents, and it includes a search information analyzing unit, an extraction processing unit, and a search information regenerating unit.

The search information analyzing unit receives as inputs search information, analyzes the same, and outputs a plurality of search information elements constituting the search information. The extraction processing unit receives as inputs the plurality of search information elements output from the search information analyzing unit and, in accordance with a prescribed condition, extracts two or more search information elements corresponding to a part of the search information, among the input plurality of search information elements.

The search information regenerating unit generates a partial tree of the search information represented by the tree structure, based on the two or more search information elements extracted by the extraction processing unit.

By the above described search information transmitting apparatus, among the plurality of search information elements of the search information represented by the tree structure to be transmitted or received, based only on the necessary search information elements extracted in accordance with the prescribed condition, a partial tree of the search information to be transmitted or received is generated. Therefore, only the necessary and sufficient search information represented by the partial tree can be transmitted or received.

The above described search information transmitting apparatus may further include a condition setting unit for variably setting the prescribed condition. Here, the two or more search information elements extracted based on the prescribed condition, that is, the necessary search information elements, can variably be set. Therefore, the search information represented by a desired partial tree can easily be transmitted or received.

In the above described search information transmitting apparatus, the condition setting unit may set the type of search information elements of the search information represented by the tree structure as the prescribed condition. Here, the two or more search information elements extracted based on the prescribed condition, that is, the necessary search information elements, can be designated by the type. Therefore, the search information represented by a desired partial tree generated based only on the desired type of search information elements can easily be transmitted or received.

The search information transmitting apparatus in accordance with another aspect of the present invention is for transmitting or receiving a plurality of pieces of search information represented by tree structures for searching for information of moving image contents, and it includes a search information analyzing unit, a condition setting unit, an extraction processing unit, and a search information regenerating unit.

The search information analyzing unit receives as inputs a plurality of pieces of search information, analyzes the same, and outputs a plurality of search information elements constituting the plurality of pieces of search information. The condition setting unit receives as inputs the plurality of search information elements output from the search information analyzing unit, and sets an extracting condition, in accordance with the nature of the input plurality of search information elements. The extraction processing unit receives as inputs the plurality of search information elements output from the search information analyzing unit, and from the input plurality of search information elements, extracts part of the search information elements corresponding to the plurality of pieces of search information respectively, based on the extracting condition set by the condition setting unit. The search information regenerating unit generates partial trees of respective ones of the plurality of pieces of search information represented by the tree structure, based on the part of search information elements corresponding to each of the plurality of pieces of search information extracted by the extraction processing unit.

In the above described search information transmitting apparatus, in setting condition, a search information element common to a plurality of pieces of search information may be set as the extracting condition.

By the above described search information transmitting apparatus, among the plurality of search information elements of the plurality of pieces of search information represented by the tree structure to be transmitted or received, based only on the necessary search information elements extracted in accordance with the extracting condition, partial trees of the search information to be transmitted or received are generated for each of the plurality of pieces of search information, respectively. Accordingly, it becomes possible to transmit or receive only the necessary and sufficient search information represented by the partial trees, for respective ones of the plurality of pieces of search information.

By the above described search information transmitting apparatus, it is possible to generate, for a plurality of pieces of search information, respective partial trees of search information to be transmitted or received, using, as the extracting condition, a search information element that is common to a plurality of pieces of search information.

### Brief Description of the Drawings

Fig. 1 is a schematic diagram of the search information transmitting apparatus in accordance with a first embodiment of the present invention.
Fig. 2 shows search information represented by a tree structure, used in the first embodiment of the present invention.
Fig. 3 illustrates operations of the search information analyzing unit and the filtering processing unit in accordance with the first embodiment of the present invention.
Fig. 4 shows a structure of a partial tree generated by the search information reorganizing unit in accordance with the first embodiment of the present invention.
Fig.5 is a schematic diagram of the search information transmitting apparatus in accordance with a second embodiment of the present invention.
Figs. 6A and 6B show search information represented by tree structures, used in the second embodiment of the present invention.
Figs. 7A and 7B show structures of partial trees resulting from a filtering process of the tree structures shown in Figs. 6A and 6B.
Fig. 8 represents a general structure of moving image contents.
Fig. 9 represents, by a tree structure, search information added to the moving image contents of Fig.8.
Fig. 10 illustrates the search information for the moving image contents of Fig. 8.

### Best Modes for Carrying Out the Invention

Embodiments of the present invention will be described in the following, with reference to the drawings.

### (First Embodiment)

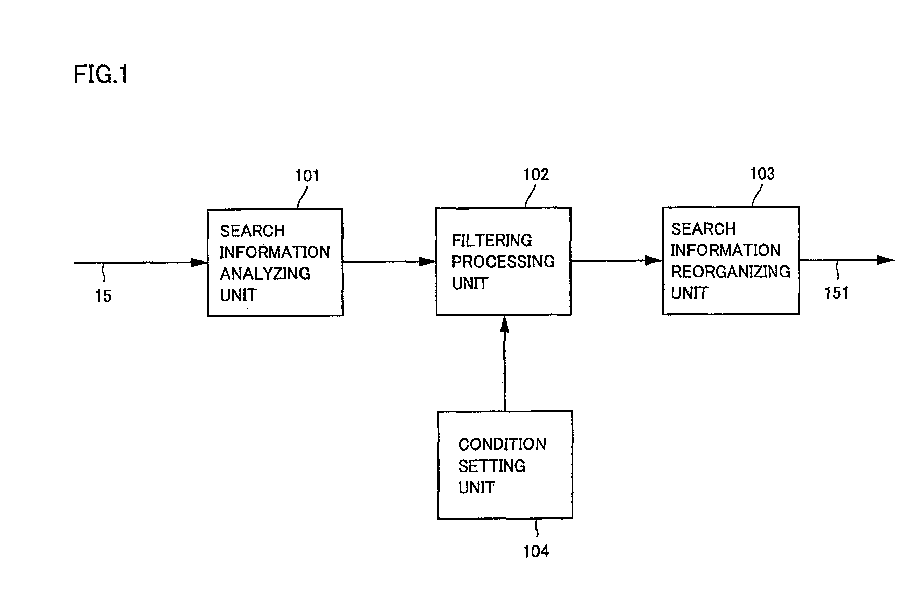

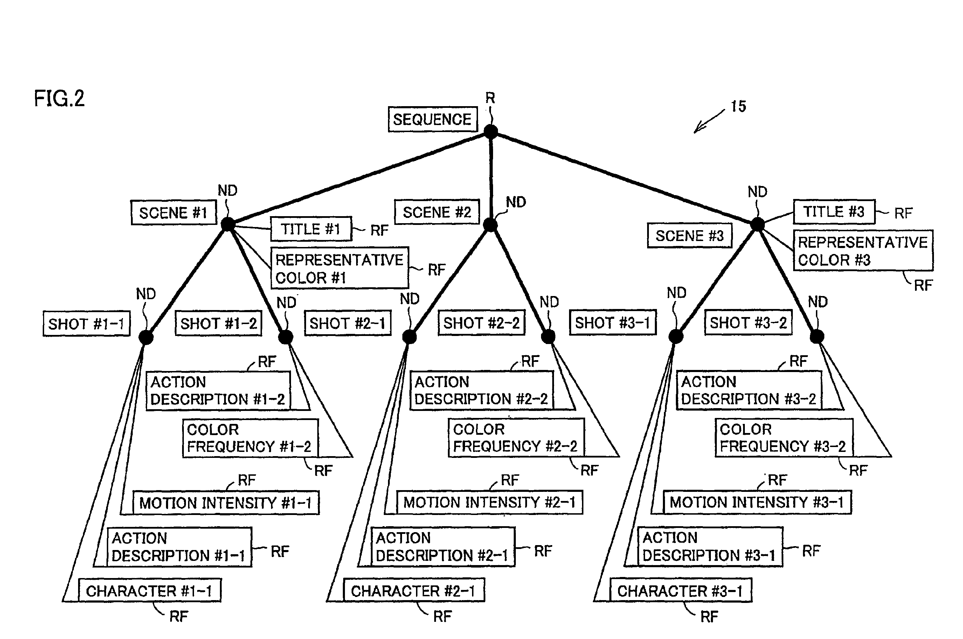

Referring to Fig. 1, the search information transmitting apparatus in accordance with the present embodiment includes a search information analyzing unit 101, a filtering processing unit 102, a search information reorganizing unit 103 and a condition setting unit 104. Fig. 2 shows search information 15 represented by a tree structure, of the moving image contents in accordance with the present embodiment. Referring to Fig. 2, one moving image sequence is divided into three scenes (scene #1, scene #2, scene #3), and each scene is divided into two shots (shot #1-1, shot #1-2: shot #2-1, shot #2-2: shot #3-1, shot #3-2). Semantic search information elements representing a title, an action description of a character and the like, and signal search information elements representing a representative color, motion intensity, color frequency and the like are added to each scene and each shot.

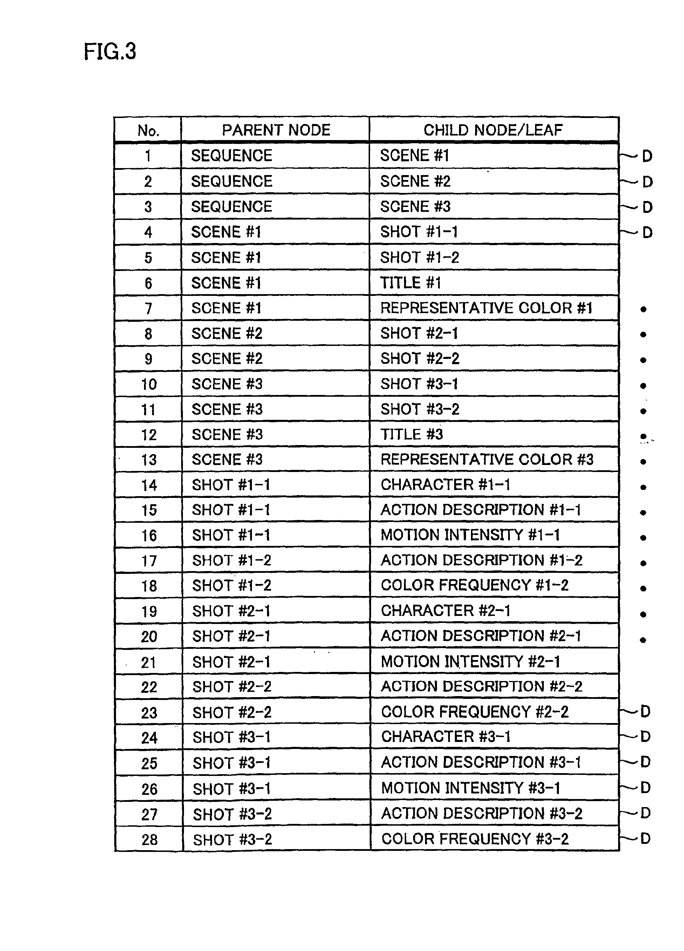

When the search information 15 represented by the tree structure of Fig. 2 is input, search information analyzing unit 101 analyzes, for every branch of the input search information 15, relation between a node ND as a parent and node ND/leaf RF as a child and the type of search information element. The result of analysis is output to filtering processing unit 10. Fig. 3 shows a plurality of different data D obtained as a result of the analysis. Data D is obtained for every different relation between the parent node ND and a child node ND/leaf RF. The parent node ND and the child node ND/leaf RF related to each other in data D are represented by corresponding type of search information element. Referring to Fig.3, data D includes a number No. for uniquely identifying the data, and types of search information elements of the related parent node ND and child node ND/leaf RF. The number of relations analyzed by search information analyzing unit 101, that is, the number of data D obtained as a result of analysis, is the same as the number of branches of the tree structure shown in Fig.2.

Condition setting unit 104 designates type (title, motion intensity, color frequency or the like) of the necessary search information element among the search information elements, and filtering processing unit 102 is notified of the designated type of the search information element. One or a plurality of types of the search information elements may be designated. Here, it is assumed that "title" and "motion intensity" are designated as the necessary types of search information elements. Based on the types of search information elements notified by condition setting unit 104, filtering processing unit 102 performs filtering of search information 15. The process will be described with reference to Fig.3.

Among a plurality of data D of Fig. 3, data D that includes a child node ND/leaf RF having the type of search information element same as the type of search information element notified by condition setting unit 104, that is, the type of "title" or "motion intensity", is extracted. As a result, data D of Nos. 6, 12, 16, 21 and 26 are extracted.

Then, data D that includes, in child node ND/leaf RF, the parent node ND of any of the extracted five data D (Nos. 6, 12, 16, 21 and 26) is extracted. Specifically, the parent node ND of data D, No. 12 represents "scene #3". Therefore, all the data D of which type of search information element corresponding to the child node ND/leaf RF represents "scene #3" are extracted. In this example, data D, No. 3 is extracted. The type of search information element of parent node ND of data D, No. 21 represents "shot #2-1", and therefore, data D of which type of search information element corresponding to the child node ND/leaf RF represents "shot #2-1" is extracted. As a result, data D, No. 8 is extracted. The extracting process is repeated in this manner until a sequence representing the root R appears as the parent node ND. Eventually, 11 data D, that is, data Nos. 1, 2, 3, 4, 6, 8, 10, 12, 16, 21 and 26 of Fig. 3 are extracted. In this manner, two or more data D are extracted form filtering processing unit 102 and output to search information reorganizing unit 103.

Search information reorganizing unit 103 receives as inputs the data D extracted by filtering processing unit 102, and forms a partial tree corresponding to the tree of Fig. 2, based on the parent-child relation (parent node ND-child node ND, parent node ND-leaf RF) of the tree structure represented by the input data D. Specifically, it forms a partial tree based on the relation corresponding to data Nos. 1, 2, 3, 4, 6, 8, 10, 12, 16, 21 and 26 of Fig. 3 extracted by filtering processing unit 102, and transmits or stores the same as partial search information 151.

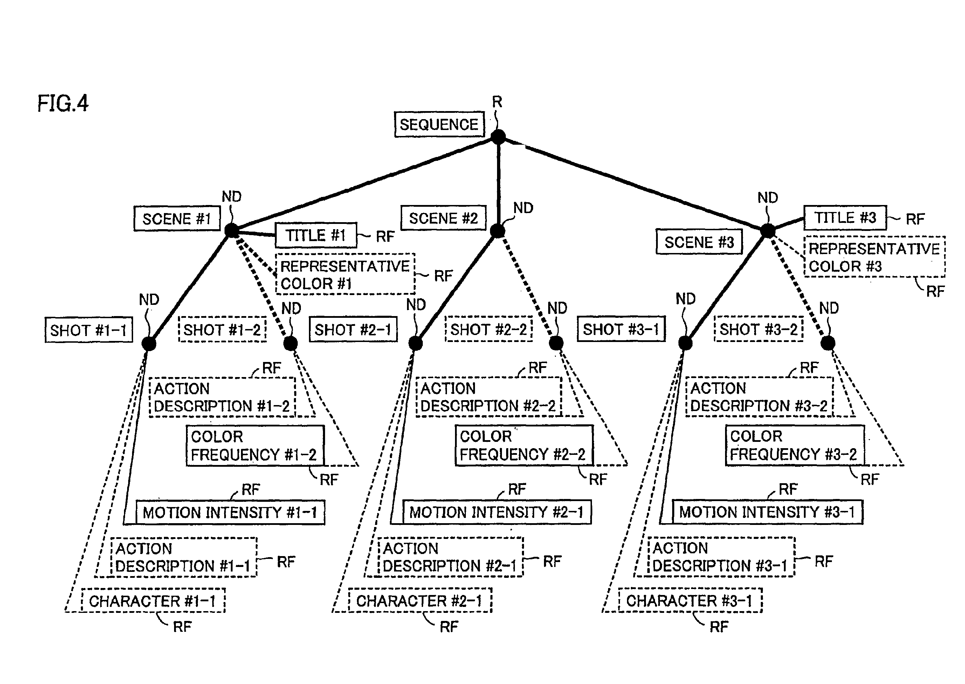

Fig. 4 shows the partial tree structure obtained as a result of filtering of the tree structure shown in Fig. 2. In Fig. 4, nodes ND and leafs RF cut from the tree structure of Fig.2 as a result of filtering are shown in broken lines. In other words, only the plurality of nodes ND and plurality of leafs RF, including the root R, that are shown in solid lines in Fig. 4 are transmitted or stored as partial search information 151.

As described above, the partial tree structure including only the designated search information elements is transmitted or stored as the search information (partial search information 151), and therefore, it becomes possible to efficiently transmit or store search information necessary and sufficient for the user. Consider a situation in which search information 15 of moving image contents is transmitted/received, for example, through a network. In that case, application of the search information transmitting apparatus in accordance with the present embodiment is not limited to transmitting side or receiving side only, and the apparatus can be applied both to the transmitting side and the receiving side. When applied to the transmitting side, the search information to be transmitted is limited from the large amount of search information 15 on the transmitting side, and minimum necessary search information (partial search information 151) is transmitted. Therefore, the amount of information to be transmitted and the communication time can be saved. When applied to the receiving side, from a large amount of search information 15 received through a network or broadcasting radio wave, only the necessary portion of the search information (partial search information 151) is extracted and stored or utilized for a search. Thus, efficiency of storage of searching information and searching on the receiving side can be improved.

### (Second Embodiment)

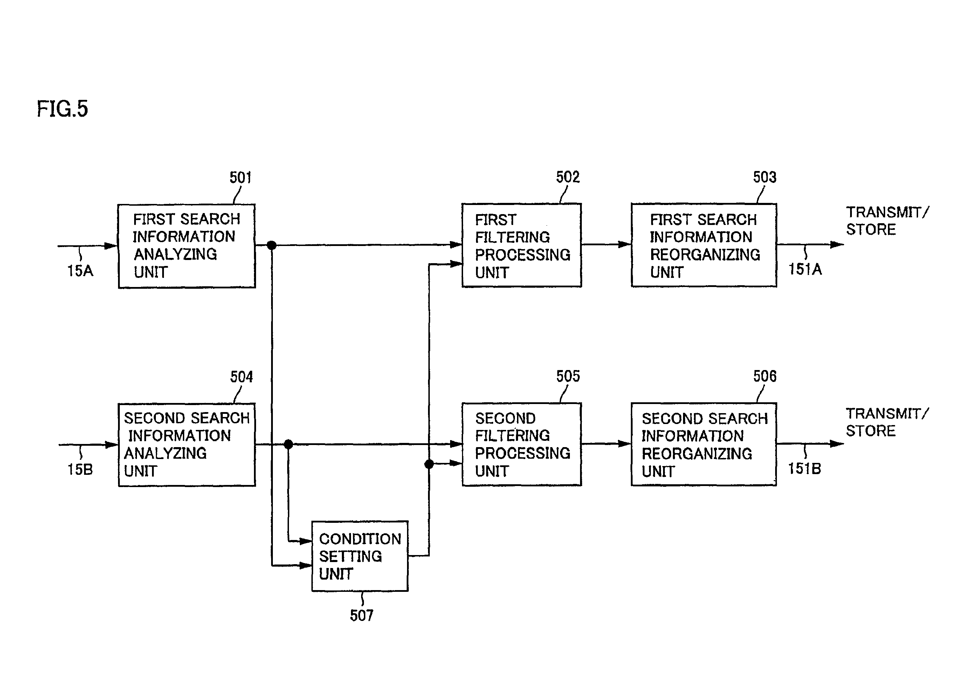

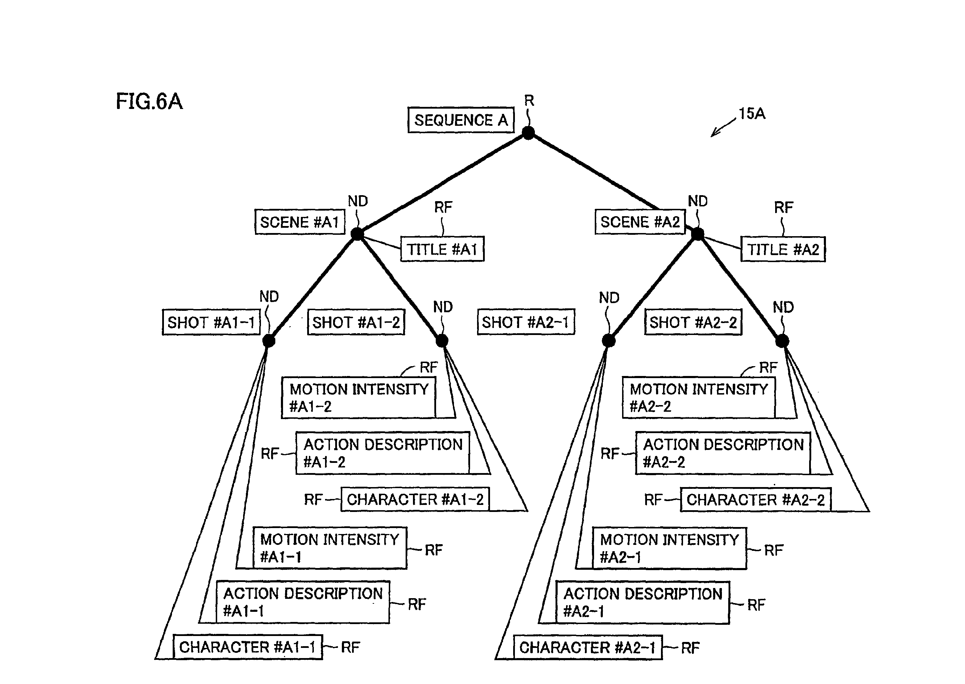

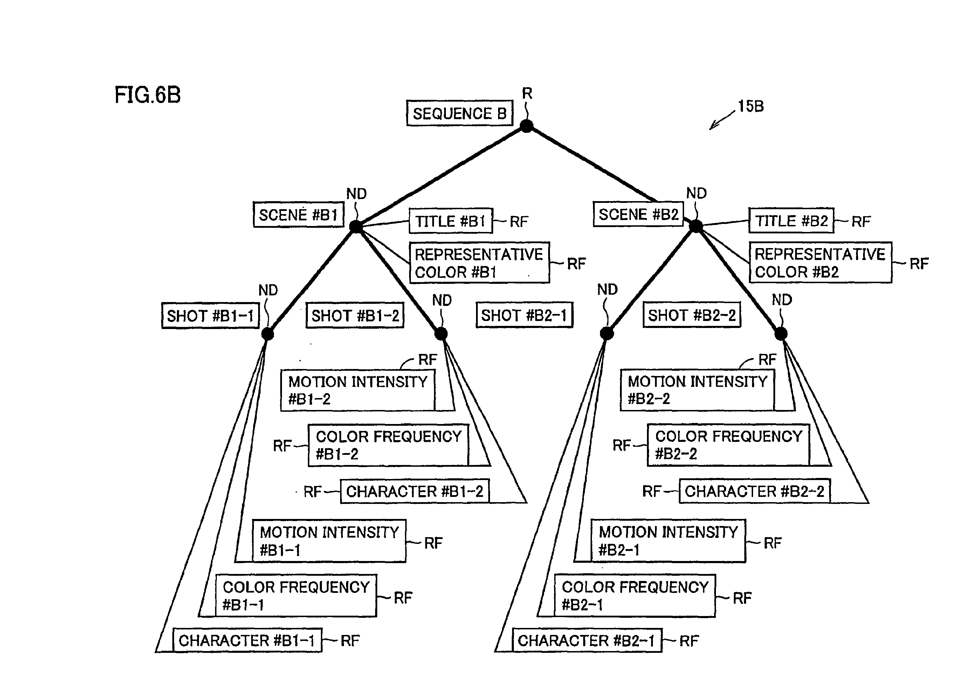

Fig. 5 shows the configuration of search information transmitting apparatus in accordance with the second embodiment of the present invention. Referring to Fig. 5, the search information transmitting apparatus includes a first search information analyzing unit 501, a first filtering processing unit 502, a first search information reorganizing unit 503, a second search information analyzing unit 504, a second filtering processing unit 505, a second search information reorganizing unit 506 and a condition setting unit 507. Figs. 6A and 6B represent pieces of search information 15A and 15B having tree structures respectively corresponding to two different moving image contents. Referring to Figs. 6A and 6B, sequences A and B as the moving image contents are each divided into two scenes (scene #A1, scene #A2: scene #B1, scene #B2), and each scene is divided into two shots (shot #A1-1, shot #A1-2, shot #A2-1, shot #A2-2: shot #B1-1, shot #B1-2, shot #B2-1, shot #B2-2).

Referring to Fig. 5, first search information analyzing unit 501 and second search information analyzing unit 504 have the same configuration as the search information analyzing unit 101 of the first embodiment. First search information analyzing unit 501 and second search information analyzing unit 504 analyze correspondence and types of respective search information elements of search information 15A and 15B corresponding to sequences A and B shown in Figs. 6A and 6B. Information indicative of the result of analysis by first search information analyzing unit 501 is supplied to first filtering processing unit 502 and condition setting unit 507, and information indicative of the result of analysis by second search information analyzing unit 504 is supplied to second filtering processing unit 505 and condition setting unit 507. The condition setting unit 507 collates the result of analysis by first search information analyzing unit 501 with the result of analysis by second search information analyzing unit 504, extracts any common search information element, and applies the same to first filtering processing unit 502 and second filtering processing unit 505. In the present embodiment, condition setting unit 507 extracts "sequence", "scene", "shot", "title", "character" and "motion intensity" as the search information elements common to sequences A and B, and these are applied to first filtering processing unit 502 and second filtering processing unit 505.

As compared with filtering processing unit 102 in accordance with the first embodiment, first and second filtering processing units 502 and 505 are different in that conditions for filtering (extraction) applied from condition setting unit 507 to first and second filtering processing unit 502 and 505 are based on the search information elements obtained from the result of analysis by first and second search information analyzing units 501 and 504. Except for this point, each of the first and second filtering processing units 502 and 505 has the same configuration as the first filtering processing unit 102. The information extracted by first filtering processing unit 502 is applied to first search information reorganizing unit 503, while the information extracted by second filtering processing unit 505 is applied to second search information reorganizing unit 506.

First and second search information reorganizing units 503 and 506 have the same function as search information reorganizing unit 103 in accordance with the first embodiment. Specifically, the first search information reorganizing unit 503 generates partial search information 151A as a partial tree based on the information extracted by first filtering process 502 and transmits or stores the same, while the second search information reorganizing unit 506 generates partial search information 151B as a partial tree based on the information extracted by the second filtering process 505, and transmits or stores the same.

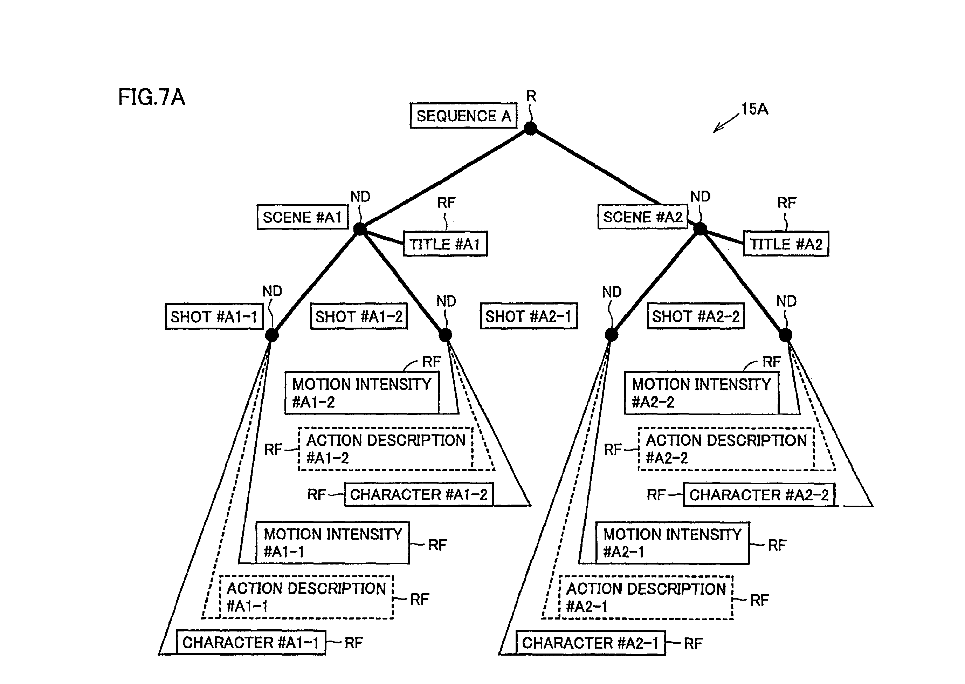

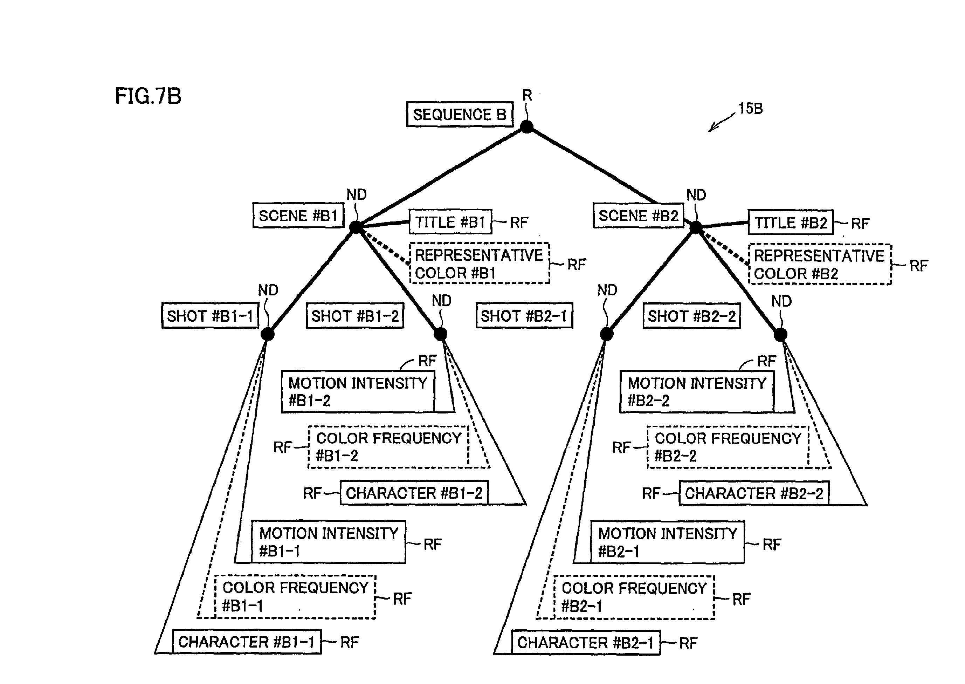

Figs. 7A and 7B represent tree structures obtained as a result of filtering the tree structures of Figs. 6A and 6B, respectively. In Figs. 7A and 7B, nodes ND and leafs RF that are cut by the filtering process from the structures of Figs. 6A and 6B are shown in broken lines. In other words, only a plurality of nodes ND and a plurality of leafs RF, including the root R, that are shown in the solid lines in Figs. 7A and 7B are transmitted or stored as partial search information 15A and 15B.

Though two pieces of search information 15A and 15B are filtered here, filtering may be performed on three or more pieces of search information.

The condition set by condition setting unit 507 is not necessarily be limited to the search information element that is common to the pieces of search information. For example, only such a search information element that is common and can be used for a wide search and considered particularly important may be set as the condition. Alternatively, a search information element that is not common but can be utilized for a wide search and considered particularly important may be set. The search information element may be set at condition setting unit 507 uniquely on the side of the apparatus, or it may be set variably by a user.

As described above, search information elements common to a plurality of pieces of search information are extracted and a partial tree structure including the elements are transmitted or stored as the search information. Therefore, search information necessary and sufficient for the user can be transmitted or stored efficiently. Consider a situation in which search information of moving image contents is transmitted/received, for example, through a network. In that case, application of the search information transmitting apparatus in accordance with the present embodiment is not limited to transmitting side or receiving side only, and the apparatus can be applied both to the transmitting side and the receiving side. When applied to the transmitting side, the search information to be transmitted is limited from the large amount of search information on the transmitting side, and minimum necessary search information is transmitted. Therefore, the amount of information to be transmitted and the communication time can be saved. When applied to the receiving side, from a large amount of search information received through a network or broadcasting radio wave, only the necessary portion of the search information is extracted and stored or utilized for a search. Thus, efficiencies of storage and searching of searching information on the receiving side can be improved.

## Claims

1. A search information transmitting apparatus transmitting or receiving search information (15) represented by a tree structure for searching for information of moving image contents, comprising:
search information analyzing means (101) for receiving as an input and analyzing said search information and outputting a plurality of search information elements (D) constituting said search information;
extraction processing means (102) for receiving as inputs said plurality of search information elements output from said search information analyzing means and extracting, from said input plurality of search information elements, two or more said search information elements corresponding to a part of said search information, based on a prescribed condition; and
search information regenerating means (103) for generating a partial tree (151) of said search information represented by said tree structure, based on said two or more search information elements extracted by said extraction processing means.

2. The search information transmitting apparatus according to claim 1, further comprising condition setting means (104) for variably setting said prescribed condition.

3. The search information transmitting apparatus according to claim 2, wherein said condition setting means sets, as said prescribed condition, type of said search information element of said search information represented by said tree structure.

4. A search information transmitting apparatus transmitting or receiving a plurality of pieces of search information (15A, 15B) represented by tree structures for searching for information of moving image contents, comprising:
search information analyzing means (501, 504) for receiving as inputs and analyzing said plurality of pieces of search information, and outputting a plurality of search information elements constituting said plurality of pieces of search information;
condition setting means (507) for receiving as inputs said plurality of search information elements output from said search information analyzing means and setting an extraction condition based on nature of said input plurality of search information elements;
extraction processing means (502, 505) for receiving as inputs said plurality of search information elements output from said search information analyzing means and extracting, from said input plurality of search information elements, part of search information elements corresponding to each of said plurality of pieces of search information, based on said extraction condition set by said condition setting means; and
search information reorganizing means (503, 506) for generating, based on said part of search information elements corresponding to each of said plurality of pieces of search information extracted by said extraction processing means, partial trees (151A, 151B) of respective ones of said plurality of pieces of search information represented by said tree structure.

5. The search information transmitting apparatus according to claim 4, wherein said condition setting means sets, as said extraction condition, said search information element common to said plurality of pieces of search information.
